# EUROPEAN PATENT APPLICATION

(11) **EP 3 594 541 A1**
(43) Date of publication of application: **15.01.2020**
(21) Application number: 18763332.6
(22) Date of filing: 13.02.2018
(51) Int. Cl.: F16K 31/06, F15B 11/08, G05D 16/20

(54) **ELECTROMAGNETIC PRESSURE REDUCTION VALVE AND FLUID PRESSURE CONTROL DEVICE PROVIDED WITH ELECTROMAGNETIC PRESSURE REDUCTION VALVE**

(30) Priority: 06.03.2017 JP 2017041598
(71) Applicant: KYB Corporation, Tokyo 105-6111 (JP)
(72) Inventor: EGAWA, Masahiro, Tokyo 105-6111 (JP); FUJII, Atsushi, Tokyo 105-6111 (JP); YAMAGATA, Hideki, Tokyo 105-6111 (JP); TERAO, Takeshi, Tokyo 105-6111 (JP); KOJIMA, Masanari, Tokyo 105-6111 (JP)
(74) Representative: Grünecker Patent- und Rechtsanwälte PartG mbB
(86) International application number: PCT/JP2018/004887
(87) International publication number: WO 2018/163722

(57) **Abstract**

An electromagnetic pressure reducing valve (40) includes a spool valve (42) configured to allow or shut off communication between a pilot passage (26) and a pilot pressure supply passage (28) and a solenoid (41) configured to give a thrust according to an intensity of a supplied electric current to the spool valve (42). The spool valve (42) has a pressure receiving surface (42d) configured to generate a thrust in a direction opposite to the thrust by the solenoid (41) by action of a pressure of a pilot pressure supply passage (28), and an area of the pressure receiving surface (42d) is set smaller than a cross sectional area of the spool valve (42).

## Description

### TECHNICAL FIELD

The present invention relates to an electromagnetic pressure reducing valve and a fluid pressure control device including the electromagnetic pressure reducing valve.

### BACKGROUND ART

JPH11-2204A discloses an electromagnetic pressure reducing valve configured to reduce a pressure of a supplied fluid to a predetermined pressure by changing a thrust of a solenoid. In this electromagnetic pressure reducing valve, the thrust according to the pressure after reduction acts on a spool against the thrust of the solenoid configured to drive the spool, and balancing of these thrusts acting on the spool determines a magnitude of the pressure after reduction. That is, by changing the thrust of the solenoid, the magnitude of the pressure after reduction can be changed.

### SUMMARY OF INVENTION

However, in the electromagnetic pressure reducing valve described in JPH11-2204A, since the pressure after reduction acts on the entire cross section of the spool, the thrust by the pressure after reduction can become large easily. On the other hand, the driving force of the solenoid giving the thrust facing this thrust to the spool is limited. Thus, it is difficult to set the pressure after reduction to a relatively high value and as a result, there is a concern that a pressure adjustment range of the electromagnetic pressure reducing valve is limited.

Moreover, if the driving force of the solenoid is made larger by increasing the size of the solenoid, the pressure after reduction can be set to a relatively high value but if the size of the solenoid is increased, the electromagnetic pressure reducing valve itself becomes larger, and there is a concern that a size of the device including the electromagnetic pressure reducing valve is increased.

The present invention has an object to enlarge a pressure adjustment range of an electromagnetic pressure reducing valve without increasing the size of the electromagnetic pressure reducing valve.

According to one aspect of the present invention, an electromagnetic pressure reducing valve configured to reduce a pressure of a working fluid flowing in through an inlet passage and flowing out through an outlet passage to a predetermined pressure. The electromagnetic pressure reducing valve includes: a valve body configured to allow or to shut off communication between the inlet passage and the outlet passage; and a solenoid configured to give a thrust according to an intensity of a supplied electric current to the valve body. The valve body has a pressure receiving surface configured to generate a thrust in a direction opposite to the thrust by the solenoid by action of a pressure of the outlet passage; and an area of the pressure receiving surface is set smaller than a cross sectional area of the valve body.

### BRIEF DESCRIPTION OF DRAWINGS

Fig. 1 is a schematic view illustrating configuration of a fluid pressure control device including an electromagnetic pressure reducing valve according to an embodiment of the present invention.
Fig. 2 is a sectional view illustrating configuration of the electromagnetic pressure reducing valve according to the embodiment of the present invention.

### DESCRIPTION OF EMBODIMENT

An embodiment of the present invention will be described below by referring to the attached drawings.

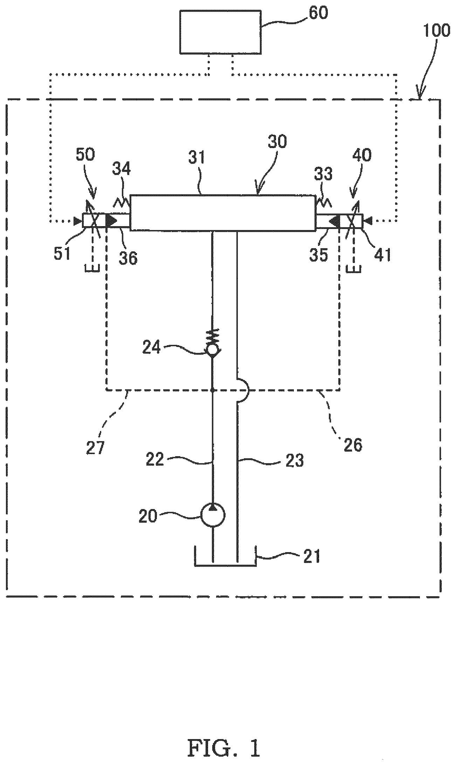

First, configuration of a fluid pressure control device 100 including electromagnetic pressure reducing valves 40 and 50 according to an embodiment of the present invention will be described by referring to Fig. 1.

The fluid pressure control device 100 is configured to control an operation of an actuator or the like, not shown, and controls extension/contraction of a hydraulic actuator used in a work machine such as a hydraulic excavator and a forklift, for example.

The fluid pressure control device 100 includes a tank 21 configured to store a working oil as a working fluid, a pump 20 as a working fluid supply source configured to pressurize and to discharge the working oil, a control valve 30 configured to control a flow of the working oil supplied to/discharged from an actuator or the like provided outside, a supply passage 22 configured to connect the pump 20 and the control valve 30, a discharge passage 23 configured to connect the control valve 30 and the tank 21, a back pressure valve 24 provided in the supply passage 22 and configured to be opened by a predetermined valve opening pressure, pilot passages 26 and 27 as inlet passages branching from the supply passage 22 on an upstream side of the back pressure valve 24, and the proportional solenoid type electromagnetic pressure reducing valves 40 and 50 configured to reduce a pressure of the working oil supplied through the pilot passages 26 and 27.

The pump 20 is driven by an engine or an electric motor, not shown, and pressurizes the working oil stored in the tank 21 to a predetermined pressure and discharges it. The working oil discharged from the pump 20 is supplied to an actuator or the like provided outside through the supply passage 22 and the control valve 30.

The control valve 30 is a hydraulic pilot type directional switching valve and has a plurality of ports, not shown, a spool 31 configured to allow or shut off communication between these ports, a pair of pilot pressure chambers 35 and 36 faced on both ends of the spool 31, and a pair of centering springs 33 and 34 provided on the both ends of the spool 31.

The number of ports of the control valve 30 is any set as appropriate in accordance with configuration of the actuator or the like to be controlled. The spool 31 is a columnar member having a plurality of land portions, not shown, and an annular groove, not shown, formed between the land portions.

The working oil whose pressure was reduced by the electromagnetic pressure reducing valves 40 and 50 is led to the pair of pilot pressure chambers 35 and 36, respectively. A position of the spool 31 is switched in accordance with a pilot pressure which is a pressure of the working oil led to the pilot pressure chambers 35 and 36.

A form of the control valve 30 may be a 3-position switching valve or may be a 2-position switching valve. For example, the control valve 30 may be a 3-port 3-position switching valve and may have a neutral position where an operation of the actuator or the like is stopped by shutting of supply/discharge of the working oil to the actuator or the like, a supply position where the actuator or the like is operated to one of directions by supplying the operation oil to the actuator or the like, and a discharge position where the actuator or the like is operated to the other direction by discharging the working oil from the actuator or the like.

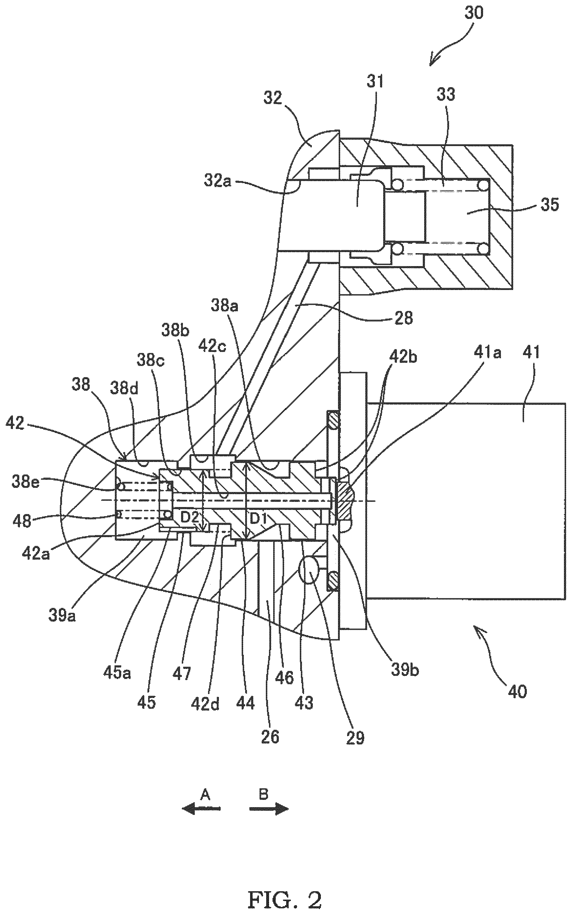

Subsequently, the electromagnetic pressure reducing valves 40 and 50 according to the embodiment of the present invention will be described by referring to Fig. 2. The two electromagnetic pressure reducing valves 40 and 50 illustrated in Fig. 1 have the same configuration and thus, the one electromagnetic pressure reducing valve 40 will be described below.

The electromagnetic pressure reducing valve 40 is assembled to a housing 32 of the control valve 30 and it includes a spool valve 42 as a valve body accommodated in a sliding hole 38 formed in the housing 32, a solenoid 41 configured to give a thrust according to an intensity of an electric current to be supplied to the spool valve 42, and a spring 48 configured to bias the spool valve 42 toward the solenoid 41.

The sliding hole 38 is a non-through hole having a bottom surface 38e and has a first sliding portion 38a provided on an opening end to which the solenoid 41 is assembled, a first enlarged-diameter portion 38b formed continuously to the first sliding portion 38a and having an inner diameter larger than the first sliding portion 38a, a second sliding portion 38c formed continuously to the first enlarged-diameter portion 38b and having an inner diameter smaller than the first sliding portion 38a, and a second enlarged-diameter portion 38d formed continuously to the second sliding portion 38c, having an inner diameter larger than the second sliding portion 38c, and provided between the second sliding portion 38c and the bottom surface 38e.

One end of the pilot passage 26 is opened in the first sliding portion 38a, and one end of a pilot pressure supply passage 28 is opened in the first enlarged-diameter portion 38b as an outlet passage allowing communication between an inside of the sliding hole 38 and an inside of the pilot pressure chamber 35.

The spool valve 42 is a columnar member and has a closed land portion 43 provided closest to a side of the solenoid 41 and in sliding contact with the first sliding portion 38a, a first land portion 44 provided at a predetermined interval in an axial direction from the closed land portion 43 and in sliding contact with the first sliding portion 38a, a second land portion 45 in sliding contact with the second sliding portion 38c, a first annular groove 46 formed between the closed land portion 34 and the first land portion 44 and provided by facing the opening end of the pilot passage 26, a second annular groove 47 formed between the first land portion 44 and the second land portion 45, and a notch 45a formed having a groove shape along the axial direction on an outer peripheral surface of the second land portion 45.

Moreover, inside the spool valve 42, a communication hole 42c allowing communication between a first space 39a as a drain chamber defined by a first end surface 42a on a side of the second land portion 45, the second enlarged-diameter portion 38d, and the bottom surface 38e and a second space 39b defined by a second end surface 42b on a side of the closed land portion 43, the solenoid 41 and the first sliding portion 38a is provided. In the second space 39b, a drain passage 29 communicating with the discharge passage 23 through a channel, not shown, is opened. That is, pressures in the first space 39a and the second space 39b are substantially equal to a pressure in the tank 21, that is, an atmospheric pressure.

The closed land portion 43 is provided so that the pilot passage 26 is not closed over an entire range where the spool valve 42 is displaced while leakage of the working oil at a high pressure supplied through the pilot passage 26 to the second space 39b is prevented.

The first land portion 44 is provided so that communication between the pilot passage 26 and the pilot pressure supply passage 28 is allowed when the spool valve 42 is displaced in a direction indicated by an arrow A in Fig. 2, while the communication between the pilot passage 26 and the pilot pressure supply passage 28 is shut off when the spool valve 42 is displaced in a direction indicated by an arrow B in Fig. 2. An area of the opening portion which allows communication between the pilot passage 26 and the pilot pressure supply passage 28 gets larger as the spool valve 42 is displaced in the direction of the arrow A.

The notch 45a is provided so that communication between the pilot pressure supply passage 28 and the first space 39a is allowed when the spool valve 42 is displaced in the direction of the arrow B, while the communication between the pilot pressure supply passage 28 and the first space 39a is shut off when the spool valve 42 is displaced in the direction of the arrow A. An area of the opening portion which allows communication between the pilot pressure supply passage 28 and the first space 39a gets larger as the spool valve 42 is displaced in the direction of the arrow B.

Moreover, an axial direction length of the notch 45a is set so that the communication between the pilot pressure supply passage 28 and the first space 39a is shut off before the spool valve 42 is displaced in the direction of the arrow A, and the communication between the pilot passage 26 and the pilot pressure supply passage 28 is allowed by the first land portion 44. That is, the pilot passage 26 and the first space 39a do not communicate with each other over the entire range where the spool valve 42 is displaced.

The solenoid 41 has a coil, not shown, and a plunger 41a having one end in contact with the spool valve 42 and pushed onto the spool valve 42 in accordance with an intensity of the electric current supplied to the coil. That is, the solenoid 41 gives a thrust for driving the spool valve 42 to the direction of the arrow A to the spool valve 42.

The spring 48 is interposed between the bottom surface 38e of the sliding hole 38 and the first end surface 42a of the spool valve 42 in a compressed state and gives a thrust to the spool valve 42 in a direction opposite to the thrust given by the solenoid 41 to the spool valve 42. It is only necessary that the spring 48 has a biasing force of a degree that pushes the spool valve 42 to the plunger 41a so that a state where the spool valve 42 and the plunger 41a are in contact is maintained even if the electric current is not supplied to the solenoid 41.

Moreover, a thrust according to the pressure of the working oil supplied to the pilot pressure chamber 35 through the pilot pressure supply passage 28 is given to the spool valve 42 as a thrust for driving the spool valve 42 in the direction of the arrow B, other than the aforementioned thrust.

In the spool valve 42 having the aforementioned shape, an outer diameter D1 of the first land portion 44 provided closer to the solenoid 41 side than the second land portion 45 is larger than an outer diameter D2 of the second land portion 45. Thus, a thrust pushing the spool valve 42 toward the direction of the arrow B is generated by action of the pressure of the working oil in the first enlarged-diameter portion 38b on a pressure receiving surface 42d having an area obtained by subtracting a sectional area of the second land portion 45 from the sectional area of the first land portion 44.

Specifically, the pressure of the working oil in the first enlarged-diameter portion 38b acts on the side surface of the first land portion 44 and the side surface of the second land portion 45, and the pressure acting on the side surface of the first land portion 44 becomes the thrust pushing the spool valve 42 toward the direction of the arrow B, and the pressure acting on the side surface of the second land portion 45 becomes the thrust pushing the spool valve 42 toward the direction of the arrow A. That is, if the outer diameter D1 of the first land portion 44 and the outer diameter D2 of the second land portion 45 are the same size, and sizes of the area of the side surface of the first land portion 44 receiving the pressure of the working oil in the first enlarged-diameter portion 38b and the area of the side surface of the second land portion 45 are the same, these thrusts are offset.

However, as described above, since the outer diameter D1 of the first land portion 44 is set larger than the outer diameter D2 of the second land portion 45, there is a difference between the area of the first land portion 44 receiving the pressure of the working oil in the first enlarged diameter portion 38b and the area of the second land portion 45 receiving the pressure of the working oil in the first enlarged diameter portion 38b. Thus, the pressure of the working oil in the first enlarged-diameter portion 38b acts on the pressure receiving surface 42d having an area obtained by subtracting the sectional area of the second land portion 45 from the sectional area of the first land portion 44 and as a result, the thrust pushing the spool valve 42 toward the direction of the arrow B is generated.

Since the pressure of the working oil supplied to the pilot pressure chamber 35, that is, the pressure after reduction acts on the pressure receiving surface 42d, the intensity of the thrust pushing the spool valve 42 toward the solenoid 41 in the direction of the arrow B is changed in accordance with the magnitude of the pressure after reduction. Then, the magnitude of the pressure receiving surface 42d is a difference between the sectional area of the first land portion 44 and the sectional area of the second land portion 45 as described above and it is set smaller than the sectional area of the first land portion 44 which is a maximum sectional area of the spool valve 42. Thus, the size of the thrust when the pressure after reduction pushes the spool valve 42 toward the solenoid 41 in the direction of the arrow B is drastically reduced as compared with the case where the entire cross-sectional surface of the spool valve 42 is made a pressure receiving surface as before. As a result, the magnitude of the pressure after reduction can be adjusted over a relatively wide range without drastically raising the thrust for the solenoid 41 to drive the spool valve 42 in the direction of the arrow A.

Subsequently, a pressure reduction action by the electromagnetic pressure reducing valve 40 having the aforementioned configuration will be described.

When the electric current is not supplied to the solenoid 41, the spool valve 42 is, as illustrated in Fig. 2, in a state pushed by the spring 48 toward the solenoid 41.

In this state, the communication between the pilot passage 26 and the pilot pressure supply passage 28 is shut off by the first land portion 44, and the communication between the pilot pressure supply passage 28 and the first space 39a is allowed by the notch 45a of the second land portion 45. That is, the pressure of the working oil in the pilot pressure supply passage 28 is substantially equal to the pressure in the tank 21.

In this state, when the predetermined electric current is supplied to the solenoid 41, the spool valve 42 is displaced to the direction of the arrow A by the thrust given by the solenoid 41. When the spool valve 42 is displaced to the direction of the arrow A, the notch 45a is closed by the second sliding portion 38c, whereby the communication between the pilot pressure supply passage 28 and the first space 39a is first shut off, and after that, the first land portion 44 enters into the first enlarged diameter portion 38b, whereby the communication between the pilot passage 26 and the pilot pressure supply passage 28 is allowed.

When the communication between the pilot passage 26 and the pilot pressure supply passage 28 is allowed, the working oil with a high pressure flows into the first enlarged diameter portion 38b through the pilot passage 26, and the pressure in the first enlarged diameter portion 38b is gradually raised.

Here, the pressure in the first enlarged diameter portion 38b acts on the side surface of the first land portion 44 and the side surface of the second land portion 45 of the spool valve 42, that is, the pressure receiving surface 42d having an area obtained by subtracting the sectional area of the second land portion 45 from the sectional area of the first land portion 44 and becomes a thrust pushing the spool valve 42 in the direction opposite to that of the thrust given by the solenoid 41. Thus, when a combined force of the thrust by the pressure in the first enlarged diameter portion 38b and the biasing force of the spring 48 exceeds the thrust of the solenoid 41 by the rise of the pressure in the first enlarged diameter portion 38b, the direction in which the spool valve 42 is displaced is changed from the direction of the arrow A to the direction of the arrow B.

When the spool valve 42 is displaced in the direction of the arrow B, the first land portion 44 enters into the first sliding portion 38a, whereby the communication between the pilot passage 26 and the pilot pressure supply passage 28 is first shut off and after that, the notch 45a is opened so that the communication between the pilot pressure supply passage 28 and the first space 39a is allowed again.

When the communication between the pilot pressure supply passage 28 and the first space 39a is allowed, the working oil in the first enlarged diameter portion 38b flows out into the first space 39a, and the pressure in the first enlarged diameter portion 38b is gradually lowered. When the combined force of the pressure in the first enlarged diameter portion 38b and the biasing force of the spring 48 falls below the thrust of the solenoid 41 by means of the drop of the pressure in the first enlarged diameter portion 38b, the direction in which the spool valve 42 is displaced is changed to the direction of the arrow A again.

As described above, alternate communication between the pilot passage 26 and the first space 39a with the pilot pressure supply passage 28 is repeated, the combined force of the thrust by the pressure in the first enlarged diameter portion 38b and the biasing force of the spring 48 is gradually balanced with the thrust of the solenoid 41, and the pressure in the first enlarged diameter portion 38b is brought into a state reduced to a predetermined pressure.

That is, the magnitude of the pressure after reduction, that is, the magnitude of the pressure in the first enlarged diameter portion 38b is changed to such an intensity that the combined force of the thrust by the pressure in the first enlarged diameter portion 38b and the biasing force of the spring 48 is balanced with the thrust of the solenoid 41. Therefore, the pressure after reduction can be adjusted by changing the intensity of the thrust of the solenoid 41, that is, the intensity of the electric current supplied to the solenoid 41, and by increasing the electric current supplied to the solenoid 41, the pressure after reduction is also increased, and by reducing the electric current supplied to the solenoid 41, the pressure after reduction is also reduced.

Here, the first end surface 42a of the spool valve 42 on the second land portion 45 side is faced with the first space 39a communicating with the drain passage 29. Thus, the size of the area of the pressure receiving surface 42d on which the pressure of the working oil after reduction acts is limited to the size obtained by subtracting the sectional area of the second land portion 45 from the sectional area of the first land portion 44 as described above and is set smaller than the sectional area of the first land portion 44 which is a cross-sectional area of the spool valve 42.

Therefore, if the magnitude of a pressure of the working oil after reduction is the same, the thrust generated by acting of the pressure after reduction on the pressure receiving surface 42d is naturally smaller than the thrust generated when the entire cross section of the spool valve 42 is made the pressure receiving surface. In other words, in order to obtain the equal pressure after reduction, the thrust given by the solenoid 41 to the spool valve 42 is smaller when a part of the cross section of the spool valve 42 is made the pressure receiving surface 42d than the case where the entire cross section of the spool valve 42 is made the pressure receiving surface.

That is, by reducing the area of the pressure receiving surface 42d having the area obtained by subtracting the sectional area of the second land portion 45 from the sectional area of the first land portion 44 on which the pressure of the working oil after reduction acts, the thrust that the solenoid 41 should give to the spool valve 42 is reduced and thus, the size of the solenoid 41 or the electric current supplied to the solenoid 41 can be reduced. Moreover, even if the pressure after reduction is a relatively high pressure, the pressure adjustment range of the electromagnetic pressure reducing valve 40 can be enlarged without increasing the size of the solenoid 41 since the thrust by the solenoid 41 does not have to be made extremely large.

If the thrust by the spring 48 is extremely smaller than the thrust by the pressure in the first enlarged diameter portion 38b which is the pressure of the working oil after reduction, specification of the solenoid 41 may be set by considering only the thrust by the pressure in the first enlarged diameter portion 38b.

The operations of the aforementioned electromagnetic pressure reducing valves 40 and 50 are controlled by a controller 60 provided outside.

The controller 60 is constituted by a microcomputer including a central processing unit (CPU), a read only memory (ROM), a random access memory (RAM), and an input/output interface (I/O interface). The controller 60 may be constituted by a single microcomputer or may be constituted by a plurality of microcomputers.

An operation amount or an operation speed by a worker is input to the controller 60 through an operation lever or the like, not shown. The controller 60 supplies the electric current according to the input operation amount or the like to the solenoids 41 and 51 of the electromagnetic pressure reducing valves 40 and 50 and controls the pressure of the working oil led to the pilot pressure chambers 35 and 36.

As described above, the controller 60 controls the operation of the control valve 30, that is, the operation of the actuator and the like by adjusting the magnitude of the pressure of the working oil led to the pilot pressure chambers 35 and 36.

Subsequently, the operation of the fluid pressure control device 100 will be described by referring to Figs. 1 and 2.

When the pump 20 is driven, the working oil discharged from the pump 20 opens the back pressure valve 24 provided in the supply passage 22 and is led to the control valve 30 and is led to the electromagnetic pressure reducing valves 40 and 50 through the pilot passages 26 and 27. At this time, the pressure on the upstream of the back pressure valve 24 is higher than the pressure on the downstream side due to an opening valve pressure of the back pressure valve 24. Thus, the working oil with a higher pressure is led to the pilot passages 26 and 27 branching from the supply passage 22 on the upstream of the back pressure valve 24.

In this state, when the operation signal according to the operation of the worker is input into the controller 60 through the operation lever or the like, the electric current is supplied to the solenoid 41 or 51 of either one of the electromagnetic pressure reducing valves 40 and 50 on the basis of the operation signal.

For example, when the electric current is supplied to the solenoid 41 on the right side in Fig. 1, the pressure of the working oil supplied to the pilot passage 26 is reduced by the electromagnetic pressure reducing valve 40, and the working oil whose pressure was reduced is led to the pilot pressure chamber 35 through the pilot pressure supply passage 28.

At this time, since the electric current is not supplied to the solenoid 51 of the electromagnetic pressure reducing valve 50 on the left side in Fig. 1, the pressure in the pilot pressure chamber 36 is substantially equal to the pressure of the tank 21. Therefore, the spool 31 is moved to the left side in Fig. 1 by the pressure difference between the two pilot pressure chambers 35 and 36. Since the position of the spool 31 is switched as above, the flow of the working oil from the pump 20 to the actuator and the like is controlled by the control valve 30, and as a result, the operation of the actuator or the like is controlled.

On the other hand, if the operation signal is not input into the controller 60, the electric current is not supplied to either of the solenoids 41 and 51. Thus, the pressure in the both pilot pressure chambers 35 and 36 becomes substantially equal to the pressure of the tank 21, and the spool 31 is held at a neutral position by the biasing forces of the centering springs 33 and 34.

As described above, in the fluid pressure control device 100, the position of the spool 31 is switched in accordance with the worker's operation or the like, and the flow of the working oil supplied to/discharged from the actuator or the like through the control valve 30 or particularly the flow of the working oil from the pump 20 to the actuator or the like is controlled.

Moreover, if the operation speed of the worker is fast or if the operation amount is large, the actuator or the like needs to be operated rapidly. If such an operation signal is input into the controller 60, a relatively large electric current is supplied to the solenoid 41 on the right side in Fig. 1, for example. If the electric current supplied to the solenoid 41 becomes larger, the pressure of the working oil reduced by the electromagnetic pressure reducing valve 40, that is, the pressure supplied to the pilot pressure chamber 35 becomes higher. Therefore, the pressure difference between the two pilot pressure chambers 35 and 36 becomes relatively large and thus, the position of the spool 31 is rapidly switched and as a result, the actuator or the like can be operated rapidly.

As described above, the pressure difference between the two pilot pressure chambers 35 and 36 is made larger by supplying a relatively large electric current to either one of the solenoids 41 and 51, and operability of the actuator or the like can be improved by switching the position of the spool 31 reliably.

Moreover, in the fluid pressure control device 100 having the aforementioned configuration, by making the electric current supplied to the solenoids 41 and 51 smaller and by making the pressure of the working oil led to the pilot pressure chambers 35 and 36 lower, the moving speed of the spool 31, that is, the operation of the actuator or the like can be made slow.

Moreover, as the fluid pressure control device 100 illustrated in Fig. 1, if the pilot pressure supply source is not provided separately, and the pressure in the circuit is used as the pilot pressure, the working oil with a pressure as high as possible needs to be led to the pilot pressure chambers 35 and 36 in order to switch the position of the spool 31 rapidly.

The electromagnetic pressure reducing valves 40 and 50 used in the fluid pressure control device 100 is capable of enlarging the pressure adjustment range without increasing the sizes of the solenoids 41 and 51 as described above and thus, even if the pilot pressure supply source is not provided separately, the working oil with a higher pressure can be led to the pilot pressure chambers 35 and 36.

According to the embodiment described above, the following effects are exerted.

In the electromagnetic pressure reducing valves 40 and 50, the size of the area of the pressure receiving surface 42d on which the pressure of the working oil after reduction acts is set smaller than the sectional area of the first land portion 44 which is a cross sectional area of the spool valve 42. As described above, since the area of the pressure receiving surface 42d on which the pressure of the working oil after reduction acts is set relatively small, the thrust by the pressure after reduction acting on the spool valve 42 becomes smaller. Thus, if the pressure after reduction is set to a relatively high pressure, the thrust to be given by the solenoid 41 to the spool valve 42 is reduced. Therefore, the pressure adjustment ranges of the electromagnetic pressure reducing valves 40 and 50 can be enlarged without increasing the size of the solenoid 41.

In the aforementioned embodiment, the back pressure valve 24 is a check valve. Instead of this, the back pressure valve may be a switching valve or any other valves configured to give predetermined channel resistance.

Moreover, in the aforementioned embodiment, the electromagnetic pressure reducing valves 40 and 50 are assembled to the housing 32 of the control valve 30. Instead of this, the electromagnetic pressure reducing valves 40 and 50 may be provided on a housing separate from the housing 32. Moreover, the sliding hole 38 is a non-through hole having the bottom surface 38e. Instead of this, the sliding hole 38 may be such that one end of a through hole is closed by a plug or the like.

Hereinafter, configuration, actions, and effects of the embodiment of the present invention will be described in summary.

The electromagnetic pressure reducing valves 40 or 50 which reduce the pressure of working oil flowing in from the pilot passage 26 and flowing out of the pilot pressure supply passage 28 to a predetermined pressure includes the spool valve 42 configured to allow or shut off the communication between the pilot passage 26 and the pilot pressure supply passage 28 and the solenoid 41 configured to give the thrust according to the magnitude of the supplied electric current to the spool valve 42, and the spool valve 42 has the pressure receiving surface 42d configured to generate the thrust in the direction opposite to the thrust by the solenoid 41 by the action of the pressure of the pilot pressure supply passage 28, and the area of the pressure receiving surface 42d is set smaller than the cross sectional area of the spool valve 42.

In this configuration, the area of the pressure receiving surface 42d is set smaller than the cross sectional area of the spool valve 42. As described above, when the size of the area of the pressure receiving surface 42d on which the pressure of the working oil after reduction acts is set smaller than the cross sectional area of the first land portion 44 which is the cross sectional area of the spool valve 42, the thrust by the pressure after reduction acting on the spool valve 42 becomes smaller. Thus, if the pressure after reduction is set to a relatively high pressure, the thrust that the solenoid 41 should give to the spool valve 42 is reduced. Therefore, the pressure adjustment ranges of the electromagnetic pressure reducing valves 40 and 50 can be enlarged without increasing the size of the solenoid 41. Moreover, since the thrust of the solenoid 41 given to the spool valve 42 against the thrust by the pressure after reduction is reduced over the entire pressure adjustment range, the size of the solenoid 41 can be made smaller, and power consumption of the solenoid 41 can be suppressed.

Moreover, the electromagnetic pressure reducing valve 40 or 50 further includes the drain passage 29 communicating with the tank 21 in which the working oil is stored, the spool valve 42 further has the first land portion 44 capable of shutting off the communication between the pilot passage 26 and the pilot pressure supply passage 28 and the second land portion 45 capable of shutting off the communication between the pilot pressure supply passage 28 and the drain passage 29, the first land portion 44 is provided closer to the solenoid 41 side than the second land portion 45, and the outer diameter D1 of the first land portion 44 is set larger than the outer diameter D2 of the second land portion 45.

Moreover, the pressure receiving surface 42d has the area with the size obtained by subtracting the sectional area of the second land portion 45 from the sectional area of the first land portion 44.

In these configurations, the outer diameter D1 of the first land portion 44 provided closer to the solenoid 41 side than the second land portion 45 is set larger than the outer diameter D2 of the second land portion 45, and the pressure of the working oil after reduction acts on the pressure receiving surface 42d having the area obtained by subtracting the sectional area of the second land portion 45 from the sectional area of the first land portion 44. As described above, if the size of the area of the pressure receiving surface 42d on which the pressure of the working oil after reduction acts is set smaller than the cross sectional area of the first land portion 44 which is the cross sectional area of the spool valve 42, the thrust by the pressure after reduction acting on the spool valve 42 becomes smaller. Thus, if the pressure after reduction is set to a relatively high pressure, the thrust that the solenoid 41 should give to the spool valve 42 is reduced. Therefore, the pressure adjustment ranges of the electromagnetic pressure reducing valves 40 and 50 can be enlarged without increasing the size of the solenoid 41. Moreover, since the thrust of the solenoid 41 given to the spool valve 42 against the thrust by the pressure after reduction is reduced over the entire pressure adjustment range, the size of the solenoid 41 can be reduced, and the power consumption of the solenoid 41 can be suppressed.

Moreover, the first end surface 42a of the spool valve 42 on the second land portion 45 side is faced with the first space 39a communicating with the drain passage 29.

In this configuration, the first end surface 42a of the spool valve 42 on the second land portion 45 side is faced with the first space 39a communicating with the drain passage 29, and the area of the pressure receiving surface 42d on which the pressure of the working oil after reduction can act is limited to the area obtained by subtracting the sectional area of the second land portion 45 from the sectional area of the first land portion 44. As described above, when the size of the area of the pressure receiving surface 42d on which the pressure of the working oil after reduction acts is set smaller than the sectional area of the first land portion 44 which is the cross sectional area of the spool valve 42, the thrust by the pressure after reduction acting on the spool valve 42 becomes smaller. Thus, if the pressure after reduction is set to a relatively high pressure, the thrust that the solenoid 41 should give to the spool valve 42 is reduced. Therefore, the pressure adjustment ranges of the electromagnetic pressure reducing valves 40 and 50 can be enlarged without increasing the size of the solenoid 41. Moreover, since the thrust of the solenoid 41 given to the spool valve 42 against the thrust by the pressure after reduction is reduced over the entire pressure adjustment range, the size of the solenoid 41 can be reduced, and the power consumption of the solenoid 41 can be suppressed.

Moreover, the fluid pressure control device 100 has the pump 20 configured to supply the working oil to the pilot passage 26 and to supply the working oil to an external actuator or the like and the pilot pressure chambers 35 and 36 to which the working oil whose pressures were reduced by the electromagnetic pressure valves 40 and 50 are led through the pilot pressure supply passage 28 and includes the control valve 30 configured to control the flow of the working oil to the external actuator or the like from the pump 20 in accordance with the magnitude of the pressure of the working oil led to the pilot pressure chambers 35 and 36.

In this configuration, the pressure of the working oil supplied from the pump 20 supplying the working oil to the external actuator or the like is used as the pilot pressure. As described above, even if the pilot pressure supply source is not provided separately, the working oil with a relatively high pressure can be led to the pilot pressure chambers 35 and 36 by using the electromagnetic pressure reducing valves 40 and 50 having wide pressure adjustment ranges. Thus, the control valve 30 configured to control the flow of the working oil from the pump 20 to the actuator or the like is operated rapidly, and as a result, operability of the actuator or the like can be improved.

Embodiments of the present invention were described above, but the above embodiments are merely examples of applications of the present invention, and the technical scope of the present invention is not limited to the specific constitutions of the above embodiments.

This application claims priority based on Japanese Patent Application No. 2017-041598 filed with the Japan Patent Office on March 6, 2017, the entire contents of which are incorporated into this specification.

## Claims

1. An electromagnetic pressure reducing valve configured to reduce a pressure of a working fluid flowing in through an inlet passage and flowing out through an outlet passage to a predetermined pressure, comprising:
a valve body configured to allow or to shut off communication between the inlet passage and the outlet passage; and
a solenoid configured to give a thrust according to an intensity of a supplied electric current to the valve body, wherein
the valve body has a pressure receiving surface configured to generate a thrust in a direction opposite to the thrust by the solenoid by action of a pressure of the outlet passage; and
an area of the pressure receiving surface is set smaller than a cross sectional area of the valve body.

2. The electromagnetic pressure reducing valve according to claim 1, further comprising:
a drain passage communicating with a tank configured to store the working fluid, wherein
the valve body further has a first land portion capable of shutting off the communication between the inlet passage and the outlet passage and a second land portion capable of shutting off the communication between the outlet passage and the drain passage;
the first land portion is provided closer to the solenoid side than the second land portion; and
an outer diameter of the first land portion is set larger than an outer diameter of the second land portion.

3. The electromagnetic pressure reducing valve according to claim 2, wherein
the pressure receiving surface has an area of a size obtained by subtracting a sectional area of the second land portion from the sectional area of the first land portion.

4. The electromagnetic pressure reducing valve according to claim 2, wherein
an end surface of the valve body on the second land portion side is faced with a drain chamber communicating with the drain passage.

5. A fluid pressure control device including the electromagnetic pressure reducing valve according to claim 1, comprising:
a working fluid supply source configured to supply the working fluid to the inlet passage and to supply the working fluid to an outside; and
a control valve having a pilot pressure chamber to which the working fluid whose pressure is reduced by the electromagnetic pressure reducing valve is led through the outlet passage and configured to control a flow of the working fluid from the working fluid supply source to the outside in accordance with a magnitude of a pressure of the working fluid led to the pilot pressure chamber.
